Europäisches Patentamt

European Patent Office

Office européen des brevets

(19)

(11) Numéro de publication: **0 220 981**
**B1**

(12) **FASCICULE DE BREVET EUROPEEN**

(45) Date de publication du fascicule du brevet:
21.03.90

(51) Int. Cl.⁴: **H02K 13/02,** H02K 15/00,
H01R 39/34

(21) Numéro de dépôt: 86402182.9

(22) Date de dépôt: 03.10.86

(54) **Rotor pour machine dynamo-électrique, notamment pour alternateur de véhicules automobiles.**

(30) Priorité: 03.10.85 FR 8514644
24.01.86 FR 8601003

(43) Date de publication de la demande:
06.05.87 Bulletin 87/19

(45) Mention de la délivrance du brevet:
21.03.90 Bulletin 90/12

(84) Etats contractants désignés:
DE ES GB IT

(56) Documents cités:
DE-A- 1 613 020
DE-A- 3 510 489
DE-C- 368 956
GB-A- 2 078 017
US-A- 1 351 897

PATENTS ABSTRACTS OF JAPAN,
vol. 5, no. 63 (E-54)[735], 28 april 1981; &
JP-A-56 12 839 (MITSUBISHI DENKI K.K.) 07-02-1981

(73) Titulaire: EQUIPEMENTS ELECTRIQUES MOTEUR, 2,
Rue André Boulle, F-94000 Creteil(FR)

(72) Inventeur: Vogelsberger, Marcel, 5, Place Leamington,
F-92330 Sceaux(FR)
Inventeur: Davoigneau, Daniel, 103, rue d'Epinal,
F-77290 Nitry le Neuf(FR)

(74) Mandataire: Gamonal, Didier, Société VALEO Service
Propriété Industrielle 30, rue Blanqui, F-93406 Saint
Ouen(FR)

ACTORUM AG

## Description

L'invention concerne un rotor pour machine dynamo-électrique, notamment alternateur de véhicule automobile du type comprenant deux disques polaires à griffes emprisonnant un bobinage inducteur relié électriquement à une bague à pistes collectrices montée en bout de l'arbre du rotor et pouvant tourner avec celui-ci et dont les pistes collectrices viennent en contact avec les balais d'un dispositif de balais porté par la machine.

Le brevet US-A-1 351 897 montre un rotor pour machine dynamo-électrique qui comprend un bobinage inducteur relié électriquement à une bague à pistes collectrices au moyen de conducteurs passant dans un conduit prévu dans un arbre creux du rotor et débouchant vers le bobinage inducteur à travers des conduits inclinés par rapport à l'axe de l'arbre creux ; un système d'ajustement est prévu de manière à pouvoir placer les orifices des conduits inclinés en face des fils conducteurs.

Mais les dispositions précitées nécessitent donc des opérations de réglage ce qui est incompatible avec des fabrications en grande série pour lesquelles les temps de montage doivent être réduits au maximum.

Dans le dispositif décrit dans la demande de brevet DE-A-1 613 020 il est prévu un système de rampe par lequel les fils conducteurs débouchent ensemble de l'arbre creux au travers d'un même orifice radial.

Ce dispositif qui permet un montage rapide et aisé présente cependant l'inconvénient de faire déboucher ensemble les fils d'alimentation du bobinage du rotor ce qui risque de provoquer des court-circuits en cas d'isolation insuffisante de ces fils.

La présente invention a pour but de pallier les inconvénients des dispositifs précités et concerne à cet effet un rotor pour machine dynamo-électrique du type précité, caractérisé en ce que dans le fond de l'alésage dans lequel est engagé l'embout de fixation prolongeant de matière la bague à pistes collectrices est préalablement inséré un guide-fils qui comporte une tête de centrage cylindrique d'un diamètre approximativement égal à l'alésage qui le reçoit, prolongée de matière par une partie médiane de forme parallélépipèdique de dimensions telles à réaliser entre elles et la paroi de l'alésage deux conduits longitudinaux diamétralement opposés pour le passage de fils conducteurs reliant les pistes collectrices et qui se raccordent à la tête de centrage par deux rainures de profil semi-circulaire à l'intérieur desquelles lesdits fils conducteurs sont susceptibles de glisser pour diverger vers l'extérieur approximativement perpendiculairement aux conduits en regard de deux orifices ménagés dans la paroi de l'alésage qu'ils traversent, pour être reliés électriquement aux extrémités du bobinage inducteur.

La description qui va suivre en regard des dessins annexés donnés à titre d'exemple fera mieux comprendre l'invention et dans lesquels :

- la figure 1 est une vue en coupe longitudinale du rotor conforme à l'invention ;

- la figure 2 est une vue en perspective éclatée du détail A de la figure 1 ;

- les figures 3 à 5 représentent les étapes successives du montage de la bague à pistes collectrices à l'extrémité de l'arbre du rotor ;

- la figure 6 est une vue en coupe longitudinale du rotor selon une autre réalisation ;

- la figure 7 est une vue en perspective éclatée du rotor représenté par la figure 6 ;

- les figures 8 à 10 représentent les étapes successives du montage de la bague à pistes collectrices à l'extrémité de l'arbre du rotor.

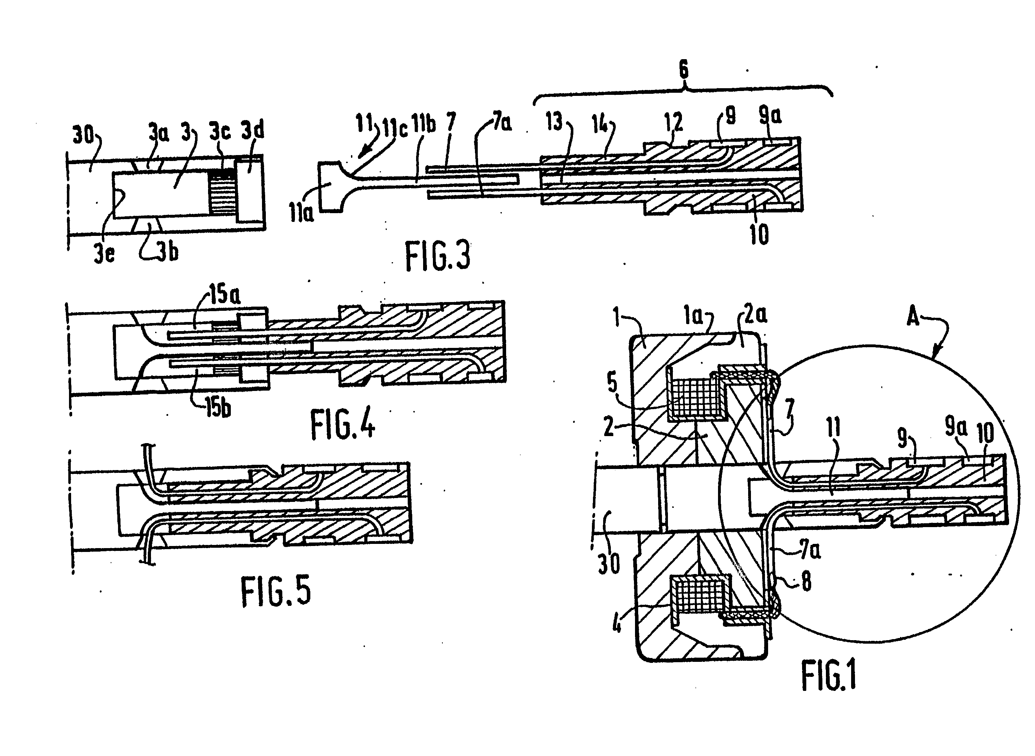

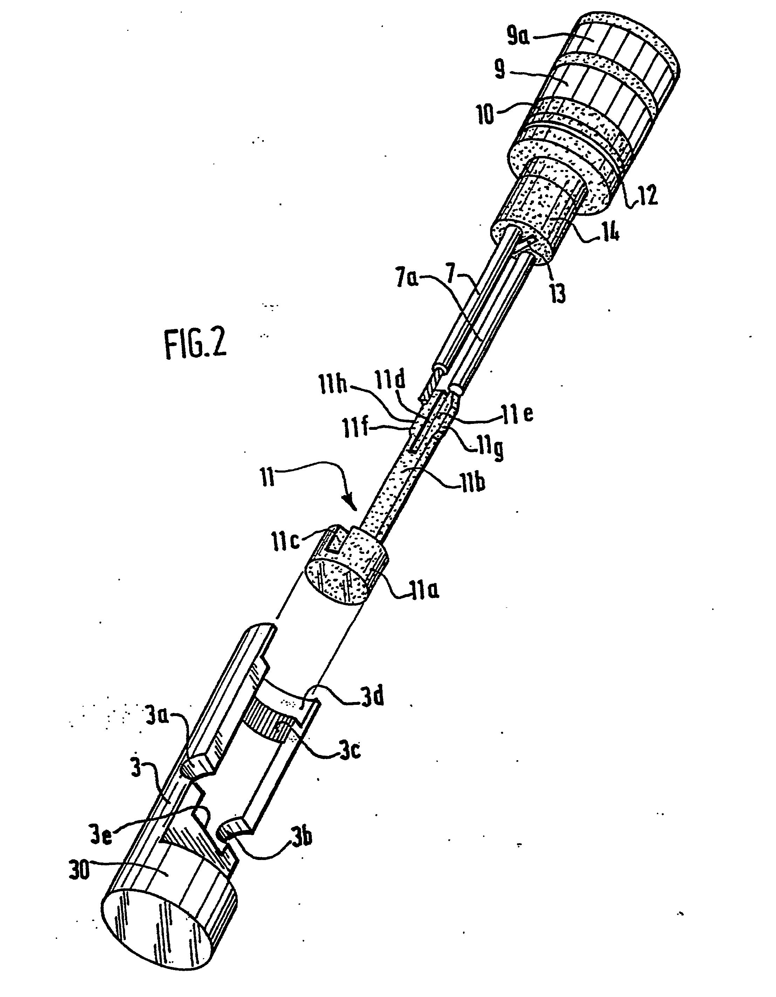

Selon la figure 1, le rotor est constitué dans un premier mode de réalisation de deux disques polaires 1 et 2 possédant en leur périphérie des griffes 1a et 2a rabattues parallèlement à l'axe de rotation du rotor et d'un noyau magnétique au centre desdits disques polaires 1 et 2 solidaires d'un arbre 30 du rotor.

Les disques polaires 1 et 2 enserrent une bobine 4 obtenue par moulage de matière plastique sur laquelle est bobiné un fil inducteur 5 relié électriquement par le fil 7 à une bague 6 à pistes collectrices dont les pistes collectrices 9 et 9a viennent en contact avec les balais d'un porte-balais non représenté, ladite bague 6 à pistes collectrices est solidaire en rotation avec l'arbre 30 du rotor grâce à un embout 14 de fixation prolongeant de matière ladite bague 6 à pistes collectrices et s'insérant dans un alésage 3 de l'arbre 30 du rotor d'un diamètre équivalent prévu à cet effet.

Les fils conducteurs 7 et 7a reliant respectivement les pistes 9 et 9a et qui, sortant à l'extrémité de l'embout 14 de la bague 6 à pistes collectrices dans lequel ils sont noyés par surmoulage, sont guidés dans l'alésage 3 par un guide-fils 11 dont la forme est telle qu'il délimite avec la paroi de l'alésage 3 deux conduits 15a et 15b le long desquels ils s'étendent pour déboucher de l'alésage 3 à travers des orifices 3a et 3b sont approximativement perpendiculaires à l'axe longitudinal de l'arbre 30 et diamétralement opposés.

Le guide-fils 11 avantageusement réalisé en matière isolante comporte une tête de centrage 11a cylindrique dont le diamètre est approximativement égal à l'alésage 3 qui le reçoit. La tête de centrage 11a est prolongée par une partie médiane 11b, de forme parallélépipèdique, raccordée à la tête de centrage 11a par deux rainures 11c ménagées dans ladite tête de centrage 11a de manière telle que leur fond suit une ligne semi-circulaire le long de laquelle les fils conducteurs 7 et 7a s'incurvent pour déboucher perpendiculairement à travers les orifices 3a et 3b.

L'extrémité libre de la partie médiane 11b est expansible de manière à pénétrer élastiquement dans une fente 13 correspondante ménagée dans l'embout 14 dans laquelle elle s'indexe.

L'élasticité de l'extrémité libre de la partie médiane 11b est réalisée grâce à une fente longitudinale 11d qui détermine deux branches 11e et 11f s'étendant approximativement parallèlement à l'axe longitudinal du guide-fils 11 et portant des saillies 11g et 11h tournées vers l'extérieur.

Des stries 3c saillantes sont ménagées à l'entrée de l'alésage 3 de façon à permettre l'immobilisation en rotation du porte-pistes 10 par rapport à l'arbre 30 du rotor, lesdites stries 3c s'incrustant dans l'embout 14 du porte-pistes 10.

A l'extrémité de l'arbre 30 du rotor est ménagée une collerette 3d circulaire périphérique de diamètre intérieur supérieur au diamètre de l'alésage 3 susceptible d'être refoulé par sertissage dans un évidement 12 annulaire correspondant ménagé sur le porte-pistes 10 pour la retenue axiale de celui-ci.

Le montage s'effectue de la manière représentée sur les figures 3 à 5.

Le guide-fils 11 est mis en regard de la fente 13 du porte-pistes 10 dans laquelle la partie médiane 11b est insérée dans la fente 13 du porte-pistes 10 jusqu'à ce que les fils 7 soient approximativement au niveau à partir duquel les rainures 11c se raccordent à la partie médiane 11b.

Lors de la pénétration de la partie médiane 11b dans la fente 13, son extrémité libre subit une déformation élastique résultant des saillies 11h et 11g tendant à ramener les branches 11e et 11f l'une vers l'autre et conséquemment à créer une pression transversale tendant à maintenir le guide-fils 11 dans l'embout 14.

La tête de centrage 11a est mise en regard avec l'arbre 30 du rotor et est insérée dans l'alésage 3 jusqu'à ce que la tête de centrage 11a soit en contact avec le fond 3e de l'alésage 3. Les fils 7 se trouvent dans les deux conduits 15a et 15b le long desquels ils s'étendent. La force de pénétration continue d'agir sur le porte-pistes 10 qui pénètre à son tour dans l'alésage 3 de l'arbre 30 du rotor.

Les fils 7 sont guidés le long du guide-fils 11 et divergent vers l'extérieur approximativement perpendiculaires aux conduits 15a et 15b grâce aux rainures 11c formant rampes et débouchent de l'arbre 30 du rotor par les deux orifices 3a et 3b et se trouvent en regard des fils 5 de la bobine 4 (figure 1).

Le porte-pistes 10 vient en butée contre le fond de la collerette 3a de l'alésage 3. Les stries 3c saillantes s'incrustent dans l'embout 14 l'empêchant en rotation dans l'arbre 30 du rotor.

La fin du montage s'effectue par le sertissage de la collerette 3d dans l'évidement 12 du porte-pistes 10 et par le soudage 8 des fils 7 avec les fils inducteurs 5 de la bobine 4.

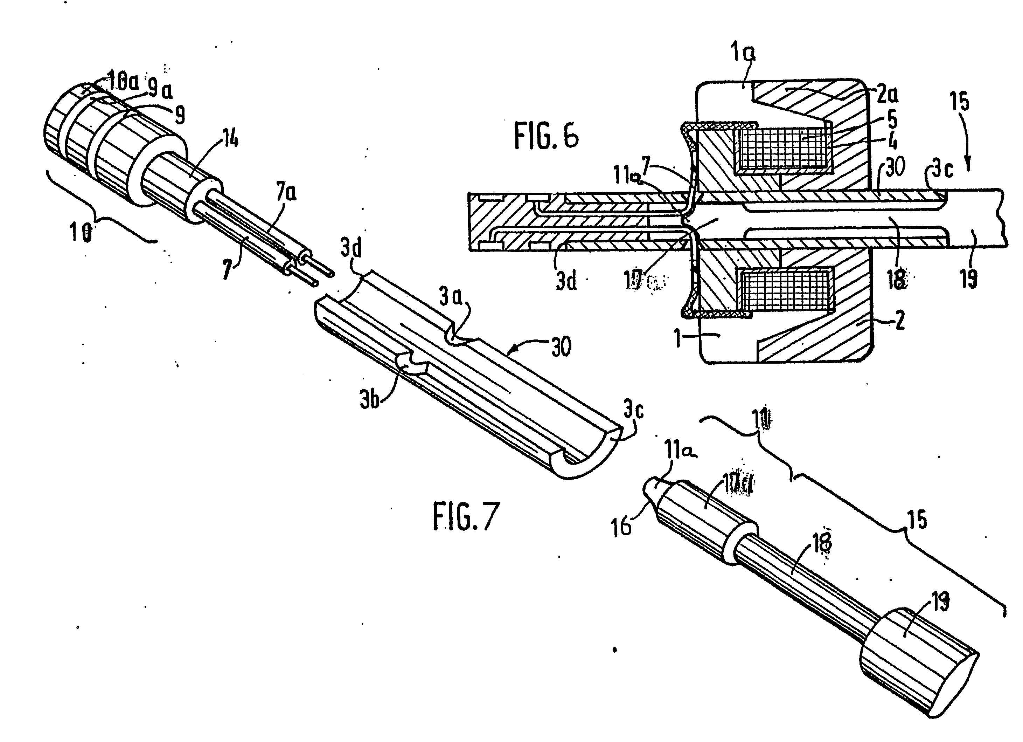

Selon un second mode de réalisation représenté par la figure 6 dont l'arbre 30 se présente sous la forme d'un arbre entièrement creux et conséquemment ne comportant pas de butée dans l'alésage est réalisé à l'extrémité d'un outil amovible 15.

Le guide-fils 11 est constitué d'une partie centrale cylindrique 17 dont le diamètre est approximativement égal à l'alésage de l'arbre creux 30, l'une de ses extrémités formant tête de centrage 11a se présente sous la forme d'une demi-gorge annulaire déterminant une rampe 16, l'autre extrémité raccordée de matière à un outil amovible 15 constitué d'un axe 18 de diamètre inférieur au guide-fils 11 et d'un support 19 de diamètre supérieur à l'alésage de l'arbre creux 30 et servant de butée de positionnement au guide-fils 11.

Cet outil amovible 15 a une longueur telle que la rampe 16 du guide-fils 11 soit positionnée en regard des orifices 3a et 3b ménagés dans l'arbre creux 30 qu'ils traversent.

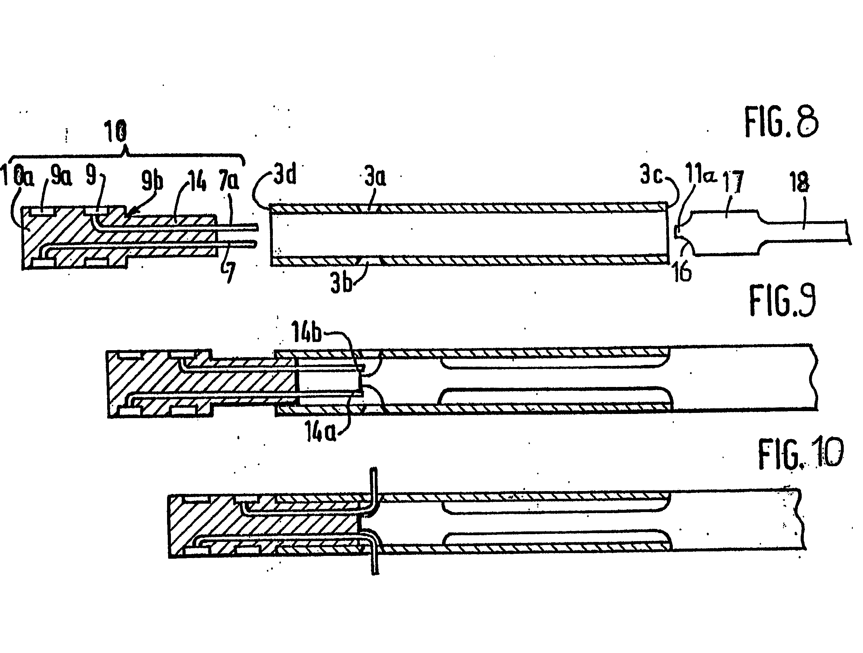

Les figures 8 à 10 feront mieux comprendre le mode opératoire.

Le guide-fils 11 est inséré dans l'alésage de l'arbre creux 30 et coulisse dans ledit arbre 30. Le support 19 de l'outil 15 vient en butée contre l'extrémité 3c de l'arbre creux 30 et positionne ainsi la rampe 16 du guide-fils 11 en regard des orifices 3a et 3b ménagés dans la paroi de l'arbre creux 30.

L'embout 14 de la bague 10 à pistes collectrices est mis en regard avec l'arbre creux 30 et est inséré dans l'arbre creux 30 jusqu'à ce que la portée 9b réalisée par la différence des diamètres respectivement de la bague à pistes collectrices 10 et de l'embout 14 soit en butée contre l'extrémité 3d de l'arbre creux 30.

Les fils conducteurs 7 et 7a sont guidés le long du guide-fils 11 et divergent vers l'extérieur approximativement perpendiculaires aux conduits 14a et 14b grâce à la rampe 16 du guide-fils 11 et débouchent de l'arbre creux 30 par les deux orifices 3a et 3b et se trouvent en regard des fils 5 de la bobine 4.

Les fils conducteurs 7 et 7a étant positionnés, l'outil amovible 15 portant le guide-fils 11 est retiré.

L'opération de soudage des fils conducteurs 7 et 7a avec les fils 5 de la bobine 4 est ensuite exécutée de manière connue.

Il est évident que le mode de réalisation de l'extrémité profilée de l'outil peut être différent comme par exemple comporter des moyens d'indexation par rapport aux orifices 3a et 3b si ladite extrémité profilée de l'outil est non circulaire comme par exemple comportant deux méplats disposés symétriquement afin de constituer des rainures de guidage sans pour cela sortir du cadre de l'invention.

## Revendications

1) Rotor pour machine dynamo-électrique notamment alternateur de véhicule automobile du type comprenant deux disques polaires (1, 2) à griffes (1a, 2a) emprisonnant un bobinage (5) inducteur relié électriquement à une bague à pistes collectrices (6) montée en bout de l'arbre (30) du rotor et pouvant tourner avec celui-ci et dont les pistes collectrices (9) viennent en contact avec les balais d'un dispositif de balais porté par la machine, caractérisé en ce que dans le fond de l'alésage (3) dans lequel est engagé l'embout (14) de fixation prolongeant de matière la bague à pistes collectrices (6) est préalablement inséré un guide-fils (11) qui comporte une tête de centrage (11a) cylindrique d'un diamètre approximativement égal à l'alésage (3) qui le reçoit, prolongée de matière par une partie médiane (11b) de forme parallélépipèdique de dimensions telles à réaliser entre elles et la paroi de l'alésage (3) deux conduits (15a, 15b) longitudinaux diamétralement opposés pour le passage de fils (7) conducteurs reliant les pistes collectrices (9), et qui se raccordent à la tête de centrage (11a) par deux rainures (11c) de profil semicirculaire à l'intérieur desquelles lesdits fils (7) conducteurs sont susceptibles de glisser pour diverger vers l'extérieur approximativement perpendiculairement aux conduits (15a, 15b) en regard de deux orifices (3a, 3b) ménagés dans la paroi de l'alésage (3) qu'ils traversent, pour être reliés électriquement aux extrémités (8) du bobinage (5) inducteur.

2) Rotor selon la revendication 1, caractérisé en ce que l'extrémité libre de la partie médiane (11b) du guide-fils (11) est expansible de manière à pénétrer élastiquement dans une fente (13) correspondante ménagée dans l'embout (14) de fixation de la bague à pistes collectrices (6) dans lequel le guide-fils (11) s'index par rapport aux fils (7) conducteurs.

3) Rotor selon la revendication 2, caractérisé en ce que l'extrémité libre de la partie médiane (11b) comporte une fente (11d) longitudinale qui détermine deux branches (11e, 11f) élastiquement déformables s'étendant approximativement parallèlement à l'axe longitudinal et comportant des saillies (11g, 11h) tournées vers l'extérieur

4) Rotor selon la revendication 1, caractérisé en ce que l'entrée de l'alésage (3) est garnie de stries (3c) saillantes qui, s'incrustant dans l'embout (14) de fixation de la bague à pistes collectrices (6), l'immobilisent en rotation par rapport à l'arbre (30) du rotor.

5) Rotor selon la revendication 1, caractérisé en ce qu'une collerette (3d) périphérique est ménagée à l'extrémité de l'arbre (30), susceptible d'être refoulée par sertissage dans un évidement (12) annulaire correspondant ménagé sur la bague (10) à pistes collectrices pour la retenue axiale de celle-ci.

6) Rotor selon la revendication 1, caractérisé en ce que le guide-fils (11) est réalisé à l'extrémité d'un outil amovible (15) préalablement emmanché au moment du montage de la bague (10) à pistes collectrices dans l'alésage de l'arbre creux (30).

7) Rotor selon la revendication 6, caractérisé en ce que l'outil amovible (15) est en butée sur l'extrémité (3c) de l'arbre creux (30) opposée à celle dans laquelle est montée la bague (10) à pistes collectrices et a une longueur telle que son extrémité formant tête de centrage (11a) présentant une rampe annulaire (16) soit positionnée en regard des orifices (3a, 3b) ménagés dans la paroi de l'arbre creux (30) qu'ils traversent.

8) Rotor selon la revendication 7, caractérisé en ce que l'extrémité déterminant la rampe (16) se présente sous la forme d'une demi-gorge annulaire.

## Claims

1. A rotor for a dynamo-electric machine, especially an alternator for an automotive vehicle, of the type comprising two polar discs (1, 2) having jaws (1a, 2a) enclosing an inductive winding which is electrically connected to a collector head (6) having collecting elements and being mounted on the end of the rotor shaft (30), the collector head being able to rotate with the rotor, wherein the collecting elements (9) of the head make contact with the brushes of a brush device carried by the machine, characterised in that a cable guide (11) is inserted beforehand into the bottom of the cavity (3) in which the securing end portion (14), which forms an integral extension of the collector head (6), is then engaged, the said cable guide comprising a centring head (11a) which is cylindrical and which has a diameter approximately equal to the cavity (3) in which it is received, the centring head being extended integrally by a median portion (11b) in the form of a parallelepiped, the dimensions of which are such as to define between the cable guide and the wall of the cavity (3) two longitudinal conduits (15a, 15b), diametrically opposed to each other, so that conductive wires (7) connected to the collecting elements (9) can extend therethrough, with the said conduits communicating with the centring head (11a) through two grooves (11c) having a semi-circular profile, within which the said conductor wires (7) are able to slide so as to diverge towards the outside approximately perpendicularly to the conduits (15a, 15b), which are in register with two orifices (3a, 3b) formed in the wall of the cavity (3) through which they extend, so that the said wires can be electrically connected to the ends (8) of the inductive winding (5).

2. A rotor according to Claim 1, characterised in that the free end of the median portion (11b) of the cable guide (11) is expandable in such a way as to penetrate resiliently into a corresponding opening (13) which is formed in the securing end portion (14) of the collector head (6), into which the cable guide (11) is indexed with respect to the conductive wires (7).

3. A rotor according to Claim 3, characterised in that the free end of the median portion (11b) has a longitudinal opening (11d) defining two branches (11e, 11f), which are resiliently deformable and which extend approximately parallel to the longitudinal axis, the said branches having projections (11g, 11h) directed outwardly.

4. A rotor according to Claim 1, characterised in that the entry end of the cavity (3) is provided with projecting knurls (3c) which interfere with the securing end portion (14) of the collector head (6) so as to secure the latter against rotation with respect to the rotor shaft (30).

5. A rotor according to Claim 1, characterised in that a peripheral collar (3d) is formed at the end of the shaft (30) and is adapted to be swaged into gripping engagement in a corresponding annular groove (12) formed on the collector head for the axial retention of the latter.

6. A rotor according to Claim 1, characterised in that the cable guide (11) is arranged at the end of a removable tool (15), which is inserted beforehand at the time when the collector head (10) is being mounted in the cavity of the hollow shaft (30).

7. A rotor according to Claim 6, characterised in that the removable tool (15) is in abutment on the end (3c) of the hollow shaft (30) opposite to that in which the collector head (10) is mounted, and has a length such that the end thereof which forms the centring head (11a), and which defines an annular ramp (16), is positioned opposite the orifices (3a, 3b) which are formed through the wall of the hollow shaft (30).

8. A rotor according to Claim 7, characterised in that the said end defining the ramp (16) is in the form of a half neck.

## Patentansprüche

1) Läufer für dynamoelektrische Maschine, insbesondere für Wechselstromgenerator von Kraftfahrzeugen, von der Art, die zwei Polscheiben (1, 2) mit Klemmen (1a, 2a) enthält, welche eine Feldwicklung (5) festhalten, die elektrisch mit einem Schleifring (6) verbunden ist, der am Ende der Läuferwelle (30) angebracht ist und mit dieser rotieren kann und dessen Schleifelemente (9) mit den Bürsten einer an der Maschine angebrachten Bürstenvorrichtung in Berührung kommen, dadurch gekennzeichnet, daß in den Boden der Bohrung (3), worin der Befestigungsansatz (14) als durchgehende Verlängerung des Schleifrings (6) eingreift, zuvor eine Drahtführung (11) eingesetzt wird, die einen zylindrischen Zentrierkopf (11a) enthält, dessen Durchmesser etwa gleich dem der Aufnahmebohrung (3) ist, durchgehend verlängert durch einen mittleren Teil (11b) von parallelflacher Form und mit Abmessungen in der Weise, daß zwischen diesen und der Wand der Bohrung (3) zwei einander diametral gegenüberliegende Längsleitungen (15a, 15b) für den Durchtritt von Leitern (7) vorhanden sind, die die Schleifelemente (9) miteinander verbinden und die mit dem Zentrierkopf (11a) über zwei Nuten (11c) mit halbkreisförmigem Profil verbunden sind, worin die genannten Leiter (7) gleiten können, um etwa lotrecht zu den Leitungen (15a, 15b) gegenüber von zwei Öffnungen (3a, 3b) nach außen abzuweichen, welche in der Wand der Bohrung (3), wodurch sie hindurchtreten, angebracht sind, um elektrisch mit den Enden (8) der Feldwicklung (5) verbunden zu werden.

2) Läufer nach Anspruch 1, dadurch gekennzeichnet, daß das freie Ende des mittleren Teils (11b) der Drahtführung (11) so ausgedehnt werden kann, daß es elastisch in einen entsprechenden Schlitz (13) hineinpaßt, der im Befestigungsansatz (14) des Schleifrings (6) vorgesehen ist, worin die Drahtführung (11) im Verhältnis zu den Leitern (7) eingreift.

3) Läufer nach Anspruch 2, dadurch gekennzeichnet, daß das freie Ende des mittleren Teils (11b) einen Längsschlitz (11d) enthält, der zwei elastisch verformbare Schenkel (11e, 11f) begrenzt, die etwa parallel zur Längsachse verlaufen und nach außen gerichtete Vorsprünge (11g, 11h) aufweisen.

4) Läufer nach Anspruch 1, dadurch gekennzeichnet, daß der Eintritt der Bohrung (3) mit vorspringenden Streifen (3c) versehen ist, die in den Befestigungsansatz (14) des Schleifrings (6) eingreifen und dessen Drehbewegung im Verhältnis zur Läuferwelle (30) arretieren.

5) Läufer nach Anspruch 1, dadurch gekennzeichnet, daß am Ende der Welle (30) ein Umfangskragen (3d) vorgesehen ist, der durch Faltung in eine entsprechende ringförmige Aussparung (12) am Schleifring (10) zu dessen axialer Befestigung eingedrückt werden kann.

6) Läufer nach Anspruch 1, dadurch gekennzeichnet, daß die Drahtführung (11) am Ende eines herausnehmbaren Werkzeugs (15) angebracht ist, welches vorher beim Einbau des Schleifrings (10) in die Bohrung der Hohlwelle (30) eingepreßt wurde.

7) Läufer nach Anspruch 6, dadurch gekennzeichnet, daß das herausnehmbare Werkzeug (15) an dem Ende (3c) der Hohlwelle (30) anschlägt, die derjenigen gegenüberliegt, worin der Schleifring (10) eingebaut ist und eine solche Länge aufweist, daß das den Zentrierkopf (11a) bildende Ende mit seiner ringförmigen Rampe (16) gegenüber Öffnungen (3a, 3b) zu liegen kommt, die in der Wand der Hohlwelle (30), wodurch sie hindurchtreten, vorgesehen sind.

8) Läufer nach Anspruch 7, dadurch gekennzeichnet, daß das die Rampe (16) begrenzende Ende die Form einer ringförmigen Halbrille hat.

FIG.1

FIG.3

FIG.4

FIG.5

FIG.2

FIG.6

FIG.7

FIG.8

FIG.9

FIG.10

EP 0 220 981 B1